# EUROPÄISCHE PATENTANMELDUNG

(11) **EP 2 601 865 A1**
(43) Veröffentlichungstag der Anmeldung: **12.06.2013**
(21) Anmeldenummer: 12007403.4
(22) Anmeldetag: 29.10.2012
(51) Int. Cl.: A47G 7/08, E03B 3/03

(54) **Regenwasserbehälter**

(30) Priorität: 05.12.2011 DE 202011108696 U
(71) Anmelder: Graf Plastics GmbH, 79331 Teningen (DE)
(72) Erfinder: Graf, Otto P., 79331 Teningen (DE)
(74) Vertreter: Grünecker, Kinkeldey, Stockmair & Schwanhäusser

(57) **Zusammenfassung**

Bei einem Regenwasserbehälter (R) zur oberirdischen Aufstellung, mit einem aus Kunststoff hergestellten Grundkörper (1) zur Bevorratung von Regenwasser, der zumindest an einem Teilbereich seiner Sichtseite (S) ein optisch zumindest teilweise kaschierendes Dekor (D) darbietet, ist das Dekor (D) als Druck auf einen Kunststoff-Folienzuschnitt (Z) aufgebracht, der den Grundkörper (1) an der Sichtseite (S) zumindest zum Teil umfasst und nachträglich daran festgelegt ist.

## Beschreibung

Die Erfindung betrifft einen Regenwasserbehälter gemäß Oberbegriff des Patentanspruches 1.

Für die Pflanzenbewässerung insbesondere im häuslichen Bereich verwendetes Trinkwasser ist ein teures Gut und belastet die Umwelt. Die Nutzung von Regenwasser insbesondere zur Pflanzenbewässerung ist eine echte Alternative. Auch ist Regenwasser sauber, weich und wohl temperiert, also optimales Gießwasser, und kostenlos verfügbar. Insbesondere bei heutzutage großen Dachflächen steht in unseren Breiten genügend Regenwasser zur Verfügung. Diesem Umweltentlastungstrend durch Trinkwassereinsparung lassen bereits bekannte Regenwasserbehälter Rechnung tragen, die in zunehmendem Maße in Gärten, Höfen, Einfahrten, auf Terrassen oder ähnlichen vor allem häuslichen Bereichen benutzt und oft aus Fallrohren gespeist werden.

Aus dem Katalog "Regenwassernutzung mit Stil" der Firma Otto Graf GmbH Kunststofferzeugnisse, D-79331 Teningen (Internet: www.graf.info), Ausgabe 2011, Artikel-Nr. 960447-R31 Design, sind solche oberirdisch aufzustellende Regenwasserbehälter bekannt, die nach Art von Amphoren, überdimensionalen Krügen, antiken Säulen, Vasen, Ziegel- oder Naturstein-, gemauerten oder hölzernen oder mit einer Rattan-Struktur verkleideten Blöcken gestaltet und durch ein zumindest sichtseitiges Dekor ästhetisch ansprechend und dekorativ sind, wobei material-, fertigungs- oder zweckbedingte technische Merkmale des meist aus Kunststoff gefertigten Grundkörpers des Regenwasserbehälters kaschiert oder verdeckt werden. Ein in Bodennähe installierter Abzugshahn oder ein Schlauchset erlaubt die bequeme Wasserentnahme. Ein obenliegender Zulauf oder abgedichteter Anschluss kann zur Befüllung beispielsweise aus einem Fallrohr vorgesehen sein. Gegebenenfalls wird oberseitig eine Pflanzschale auf- oder eingesetzt, oder sind Standflächen für Pflanzschalen oder dgl. vorgesehen. Diese bekannten Regenwasserbehälter bedingen jedoch hohen Aufwand in der Werkzeugtechnik und Fertigung. Auch ist die Komplexität in der Lagerhaltung hoch, was in Anbetracht der Saisonalität problematisch sein kann. Höhere Beschaffungskosten für den Endverbraucher beschränken die Akzeptanz und indirekt das Potential der Entlastung der Umwelt durch die TrinkwasserEinsparung.

Bekannt sind auch oberirdisch aufzustellende Regenwasserbehälter, die zumindest sichtseitig mit Rankgitter umkleidet sind, so dass daran hochwachsende Pflanzen die technischen Merkmale des Grundkörpers oder des Regenwasserbehälters sogar insgesamt kaschieren. Im Winter oder nach extremem Wetter ist die Ästhetik jedoch oft beeinträchtigt. Außerdem kann eine turnusmäßige Bepflanzungspflege erforderlich sein. Dies sind Faktoren, die die Akzeptanz dieser Regenwasserbehälter beim Endverbraucher beschränken, und somit das Potential zur Umweltentlastung bzw. Trinkwassereinsparung nicht ausreichend nutzen lassen.

Bekannt sind schließlich auch kostengünstigere, oberirdisch aufzustellende Regenwasserbehälter aus Kunststoff mit einem Grundkörper, dessen technischer Charakter und materialbedingte Färbung gegebenenfalls überhaupt nicht oder nur unzureichend kaschiert sind. Solche Regenwasserbehälter bei einem gepflegten Hauseingang, in einem ansprechenden Hof oder kultivierten Garten oder auf einer Terrasse, z.B. nahe einem Fallrohr, aufzustellen, wird jedoch von Endverbrauchern als unästhetisch oder sogar störend empfunden, was die Akzeptanz beschränkt, und wiederum das Potential der Umweltentlastung und Trinkwassereinsparung nicht ausreichend nutzen lässt.

Der Erfindung liegt die Aufgabe zugrunde, einen Regenwasserbehälter anzugeben, der trotz eines ästhetisch ansprechenden Erscheinungsbildes kostengünstig verfügbar ist und beim Endverbraucher unbeschränkte Akzeptanz findet, um die Umwelt gezielter zu entlasten und das Potential einer z.B. im häuslichen Bereich möglichen Trinkwassereinsparung so gut wie möglich auszuschöpfen.

Die gestellte Aufgabe wird mit den Merkmalen des Patentanspruches 1 gelöst.

Da das Dekor an dem Folienzuschnitt z.B. als Druck vorgesehen und der Folienzuschnitt separat vom Grundkörper zu diesem passend vorgefertigt wird, kann der Grundkörper kostengünstig hergestellt und effizienter praktisch eingesetzt werden, weil mit dem Folienzuschnitt kombinierte Grundkörper und unbehandelte Grundkörper dann gegebenenfalls für andere Einsatzzwecke untereinander gleich sein können. Die Herstellung des Folienzuschnittes ist kostengünstig durchführbar. Es sind praktisch alle denkbaren Designs, z.B. in Druckform, nutzbar, die sich an einer Kunststofffolie aufbringen oder einbringen lassen. Zweckmäßig kann ein und derselbe Grundkörper wahlweise mit einem von vielen beliebigen Designs versehen werden, sofern der Folienzuschnitt zum Grundkörper passt. Dies ermöglicht auch eine nachträgliche Änderung des Designs, beispielsweise in einem Fall, in welchem das Erscheinungsbild in der Umgebung des Regenwasserbehälters geändert wurde und/oder das bisherige Design nicht mehr als passend empfunden wird, z.B. weil schmutzig, verschlissen, nicht mehr "in" oder wegen eines Besitzer- oder Mieterwechsels.

Deshalb sind zweckmäßig an demselben Regenwasserbehälter-Typ wahlweise Folienzuschnitte mit unterschiedlichen Dekors festlegbar bzw. sind die Folienzuschnitte wahlweise austauschbar.

Im Sinne einer einfachen Handhabung, die auch nur durchschnittliche Heimwerkerkenntnisse erfordert, ist der Folienzuschnitt beispielsweise mit zwischen Folienzuschnittsrändern wirkenden Befestigungselementen am Grundkörper festgelegt. Die Befestigungselemente können Kabelbinder, Spreiznieten, Klettverschlüsse, Hakenverschlüsse, Klebeverbindungen oder dgl. sein. Alternativ können die Befestigungselemente auch eine direkte Verbindung zwischen den Folienzuschnittsrändern und dem Grundkörper herstellen. Auch können die Befestigungselemente bereits in den Folienzuschnitt integriert sein. Beim Kauf des Regenwasserbehälters mit Folienzuschnitt oder nur des Folienzuschnittes braucht der Endverbraucher nur den zu seinem Grundkörper passenden Folienzuschnitt mit dem von ihm gewünschten Design zu erstehen, und kann er dann den dekorativ verpackten Regenwasserbehälter vor Ort fertig stellen. Alternativ können natürlich die Regenwasserbehälter auch bereits mit daran festgelegten Folienzuschnitten verkauft werden.

Bei einer zweckmäßigen Ausführungsform umfasst der Folienzuschnitt den Grundkörper nur teilumfänglich, vorzugsweise an mindestens zwei oder drei zueinander abgewinkelten und aneinander anschließenden Sichtseiten-Teilbereichen, so dass nicht abgedeckte Sichtseiten-Teilbereich durch entsprechende "taktische" Aufstellung des Regenwasserbehälters ohnedies nicht zu sehen sind. Dies kann speziell bei größeren oder komplizierter geformten Regenwasserbehälter-Grundkörpern zweckmäßig sein, die entweder eine übergroße Sichtseite haben und/oder so aufgestellt werden, dass nur ein Sichtseiten-Teilbereich einsehbar bleibt. Beispielsweise die einer Hauswand zugewandte und in einem Gebüsch verborgene Sichtseiten-Teilbereiche benötigen kein Dekor und/oder Abdeckung durch den Folienzuschnitt.

Zweckmäßig ist der Folienzuschnitt aus einer zumindest teilweise transparenten Kunststofffolie hergestellt und an seiner in Einbaulage zum Grundkörper weisenden oder der äußeren Oberseite bedruckt. Dies ist zweckmäßig, wenn die transparente Kunststofffolie klar bzw. natürlich oder nur leicht eingefärbt ist. Bei einer blickdichten, z.B. vollständig eingefärbten Kunststofffolie kann der Druck natürlich alternativ an der sichtbaren Oberseite aufgebracht werden. Der Druck (z.B. Sieb- oder Digitaldruck) hat zweckmäßig Fotoqualität, um das gewünschte Erscheinungsbild so natürlich und echt wie möglich darzustellen. Dies schließt nicht aus, das Dekor insgesamt in den Kunststoff des Zuschnittes einzuarbeiten, z.B. um einen stärkeren 3-D-Effekt zu erzielen. Der Folienzuschnitt kann eine Strukturierung aufweisen, kann glänzend oder matt sein. Mit dem Dekor kann ein Metallic-Effekt erzeugt sein.

Bei einer zweckmäßigen, herstellungstechnisch besonders günstigen Ausführungsform besteht der Folienzuschnitt aus zumindest thermisch schrumpffähigem Kunststoff, und ist der Folienzuschnitt nachträglich auf den Grundkörper aufgeschrumpft. Der Schrumpfvorgang kann beim Hersteller des Grundkörpers ausgeführt werden, oder in einem dafür spezialisierten Betrieb, oder beim Vertreiber, oder gegebenenfalls sogar beim Benutzer, falls dieser über eine entsprechende Wärmequelle oder Schrumpfvorrichtung verfügt, z.B. mit einem Heißluftgebläse oder einem Föhn umzugehen vermag. Der aufgeschrumpfte Folienzuschnitt zeichnet sich durch einen hervorragenden Sitz und eine gute Anpassung an die Form des Grundkörpers aus, widersteht Witterungs- und Verschleißeinflüssen besonders gut und passt sich hervorragend an die Oberflächenkontur des Grundkörpers an. Das Design kann per Computer berechnet auf die Schrumpfung abgestimmt sein, dass nach der Schrumpfung keine oder nur vernachlässigbare Verzerrungen vorliegen.

Zweckmäßig ist der Folienzuschnitt zum Aufschrumpfen nach Art einer Stretch-Sleeve-Folie entweder als nahtlose Schlauchfolie oder mit gehefteten, vorzugsweise verschweißten, Zuschnittsrändern ausgebildet. Dabei kann es zweckmäßig sein, um zumindest die Sichtseite des Grundkörpers weitestgehend abzudecken und das Aufbringen zu erleichtern, wenn der Folienzuschnitt in etwa als Kreiszylinder-Mantel ausgebildet und/oder mit einem Übermaß gegenüber dem Grundkörper vorgefertigt ist.

Günstig wird der Folienzuschnitt unter Einsatz mindestens einer Wärmequelle aufgeschrumpft, vorzugsweise mit zumindest einem Höhenüberstand über den Grundkörper.

Dieser Höhenüberstand stellt sicher, dass sich der aufgeschrumpfte Folienzuschnitt gut an einen oberen oder unteren Randbereich des Grundkörpers anzulegen vermag.

Zweckmäßig wird nach dem Aufschrumpfen dieser Höhenüberstand entfernt, vorzugsweise durch Abschneiden, um ein sauberes Erscheinungsbild zu gewährleisten.

Als Material für den Folienzuschnitt eignen sich beispielsweise PP, PVC, PMMA, Polykarbonate und dgl., wobei diese Auswahl nicht beschränkend aufzufassen ist. An zumindest einer Oberseite des Folienzuschnittes kann eine kratzfeste Beschichtung aufgebracht sein, z.B. auf Polyurethan- oder Acryl-Basis.

Bei einer zweckmäßigen Ausführungsform ist in dem Folienzuschnitt wenigstens ein Durchbruch auch als vorgeformte Folienzuschnitt-Montier- oder Zentrierhilfe vorgesehen, für den an der Sichtseite des Grundkörpers ein Vorsprung nutzbar ist, beispielsweise für einen Abzugshahn, einen Befüllschlauch, oder eine Abdichtung, die üblicherweise erhaben im Grundkörper platziert ist. Auf diese Weise erhält der Folienzuschnitt in Einbaulage einen vom Hersteller vorab definierten passgenauen Sitz und ist der Endverbraucher bei der Montage erheblich entlastet. Dies soll aber nicht ausschließen, den Folienzuschnitt beliebig am Grundkörper anbringen zu können, z.B. um hervorstechende Merkmale des Dekors in Bezug auf gängige Blickwinkel optimal platzieren zu können und, falls erforderlich, den Durchbruch dort auszuschneiden, wo er dann gebraucht wird.

Bei einer zweckmäßigen Ausführungsform erstreckt sich der Folienzuschnitt über die Gesamthöhe der Sichtseite des Grundkörpers, so dass bei einem Blick von der Seite auf den Regenwasserbehälter keinerlei vielleicht störende technische Merkmale des Grundkörpers zu sehen sind.

Bei einer alternativen Ausführungsform kann am Grundkörper eine obere und/oder eine untere erhabene Anlageschulter entlang der Sichtseite umlaufend geformt sein, an der der Folienzuschnitt in der Einbaulage mit einem Rand abstützbar und positionierbar ist. Der Folienzuschnitt kann in diesem Bereich bündig, versenkt oder, falls gewollt, überstehend festgelegt sein. Die Anlageschulter kann eine durchgehende Schulter sein oder aus einzelnen erhabenen Vorsprüngen gebildete werden. Dies ist eine formentechnisch einfache Maßnahme am Grundkörper schon für eine spätere Kombination mit dem Folienzuschnitt und auch gleich eine Montier- und Positionierhilfe für den Folienzuschnitt. Sie sichert dessen Position über lange Gebrauchsdauer auch unter dem Einfluss von Wind und temperaturbedingten Kontraktionen und Expansionen.

Bei einer zweckmäßigen Ausführungsform hat der Regenwasserbehälter eine kreiszylindrische Sichtseite und ist der Folienzuschnitt rechteckig oder quadratisch als Abwicklung der Sichtseite geformt. Der Folienzuschnitt kann eben und biegsam sein, oder biegsam und schon vorgebogen oder gegebenenfalls in halbstarrer Auslegung vollständig entsprechend der Krümmung der Sichtseite vorgebogen sein.

Bei einer anderen zweckmäßigen Ausführungsform hat der Grundkörper eine Sichtseite entsprechend dem Mantel eines Kegelstumpfes oder Pyramidenstumpfes und ist der Folienzuschnitt entsprechend der Abwicklung der Sichtseite mit konkav und konvex geschweiften oberen und unteren Rändern und schrägen Längsrändern geformt, oder mit den Pyramidenabschnitten entsprechend geformten unteren und oberen Rändern, die aus abgewinkelt aneinander anschließenden Geraden gebildet sind. Auch hier kann der Folienzuschnitt eben oder schon teilweise vorgebogen oder vollständig vorgebogen sein und passt er stets genau zum Grundkörper.

Bei einer weiteren zweckmäßigen Ausführungsform hat der Grundkörper eine blockförmige Gestalt, wobei beispielsweise aus Festigungs- und/oder Herstellungsgründen abwechselnd vertiefte und erhabene Bereiche in der Sichtseite vorgesehen sind. Der Folienzuschnitt ist so gestaltet, entweder eben oder schon vorgebogen, dass er als Hüllfläche des ungleichförmigen Querschnittes des Grundkörpers die Vertiefungen im Wesentlichen geradlinig überbrückt und diese technischen Strukturen des Grundkörpers vollständig kaschiert. Für solche meist großvolumige Regenwasserbehälter kann es zweckmäßig sein, relativ dicke Folien in einer Stärke von mehreren Millimetern zu verwenden und diese in einer zumindest halbstarren Einstellung vorzubiegen, so dass sie beispielsweise mit C-förmigem Verlauf, unter Aufbiegen aufbringbar oder in Längsrichtung aufschiebbar sind und dank der Elastizität selbsttätig festgelegt werden. Dies schließt nicht aus, auch in diesem Fall Befestigungselemente einzusetzen, entweder um Zuschnittsränder miteinander zu verzurren oder Zuschnittsränder am Grundkörper festzulegen. Der Folienzuschnitt ist hier eine umhüllende ansprechende Verblendung der wenig ansprechenden unregelmäßigen Sichtseite.

Um die Gebrauchseigenschaften des mit dem Folienzuschnitt versehenen Regenwasserbehälters zu verbessern, ist es zweckmäßig, wenn der Folienzuschnitt an zumindest der Außenseite eine kratzfeste Beschichtung trägt, vorzugsweise auf einer Polyurethan- oder Acryl-Basis. Diese Beschichtung kann gegebenenfalls bereits bei der Herstellung des Folienzuschnittes oder auch nachträglich (z.B. nach dem Bedrucken) vorgesehen werden.

Der Grundkörper kann nach einem Spritzgieß-, Blas- oder Rotationsgießverfahren oder durch Aufschäumen hergestellt sein, woraus günstige Gestehungskosten und hohe Formtreue resultieren.

Da der Folienzuschnitt nach dem Aufbringen technische Merkmale, Oberflächenunreinheiten, die Farbe oder Einfärbungsunregelmäßigkeiten zumindest weitestgehend verbirgt, kann der Grundkörper unter teilweiser oder vollständiger Verwendung von Kunststoff-Recycling-Material besonders kostengünstig hergestellt werden.

Anhand der Zeichnungen werden Ausführungsformen des Erfindungsgegenstandes erläutert. Es zeigen:
- Fig. 1: eine Perspektivansicht eines Regenwasserbehälter-Grundkörpers, mit einer fakultativ zugeordneten Pflanzschale und einem Abzugshahn,
- Fig. 2: eine mit dem Grundkörper von Fig. 1 kombinierbaren Folienzuschnitt mit einem Dekor, in einer vorgebogenen Ausführung,
- Fig. 3: einen flächigen ebenen Folienzuschnitt für den Grundkörper der Fig. 1 oder zum Erstellen des vorgebogenen Folienzuschnittes von Fig. 2,
- Fig. 4: eine Perspektivansicht des mit dem Folienzuschnitt kombinierten Grundkörpers, und mit eingesetzter Pflanzschale und angebrachtem Abzugshahn,
- Fig. 5: einen Detailschnitt zum Verdeutlichen des Festlegungsbereiches des Folienzuschnittes am Grundkörper,
- Fig. 6: eine Perspektivansicht einer anderen Ausführungsform eines mit einem Folienzuschnitt kombinierten Grundkörpers eines Regenwasserbehälters, einschließlich einer Detailvariante,
- Fig. 7: einen vorgebogenen oder ebenen Folienzuschnitt, passend zum Grundkörper der Fig. 6,
- Fig. 8: einen Teilschnitt zur Verdeutlichung des in Fig. 6 angedeuteten Details,
- Fig. 9: eine andere Ausführungsform eines mit einem Folienzuschnitt kombinierten Grundkörpers eines Regenwasserbehälters,
- Fig. 10: den nackten Grundkörper des Regenwasserbehälters von Fig. 9 mit technischen Details in der Sichtseite,
- Fig. 11: einen aus einem ebenen Folienzuschnitt C-vorgeformten oder gebogenen Folienzuschnitt mit Dekor, passend zum Grundkörper der Fig. 9 und 10,
- Fig. 12: eine Perspektivansicht eines beispielsweise kegelstumpfförmigen Regenwasser-Grundkörpers,
- Fig. 13: eine Perspektivansicht eines Folienzuschnittes aus schrumpffähigem Kunststoff zum Dekorieren des Regenwassergrundkörpers von Fig. 12,
- Fig. 14: eine Perspektivansicht, teilweise geschnitten, eines gegenüber Fig. 12 verschiedenen Regenwasserbehälter-Grundkörpers in einem beispielsweise als Schlauchfolie entsprechend einem Kreiszylinder-Mantel vorbereiteten Folienzuschnitt vor dem Aufschrumpfen des Folienzuschnittes auf den Grundkörper,
- Fig. 15: die Anordnung von Fig. 14 zwischen Wärmequellen zum Aufschrumpfen des Folienzuschnittes, vor dem Schrumpfvorgang,
- Fig. 16: die Anordnung von Fig. 14 nach dem Schrumpfvorgang und vor abschließender Beseitigung von Überständen,
- Fig. 17: den Regenwasserbehälter-Grundkörper mit aufgeschrumpftem Folienzuschnitt gemäß Fig. 16 beim Entfernen von Überständen, und
- Fig. 18: den gebrauchsfertigen Regenwasserbehälter von Fig. 16 mit aufgeschrumpftem Folienzuschnitt.

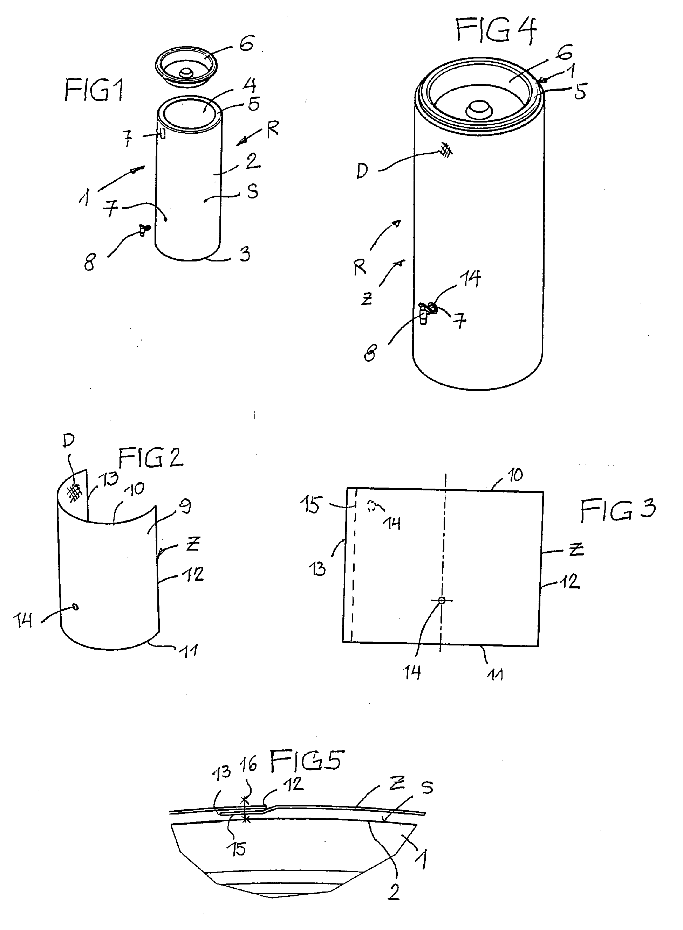

Fig. 1 zeigt perspektivisch einen Grundkörper 1 eines Regenwasserbehälters R aus Kunststoff (nach Spritzgieß-, Blas- oder Rotationsgießverfahren) mit einer von einem Kreiszylindermantel 2 gebildeten Sichtseite S, einem Boden 3, einer beispielsweise oben offenen Öffnung 4 und einem oberen Öffnungsrand 5. In der oberen Öffnung 4 des Grundkörpers 1 kann z.B. eine Pflanzschale 6 eingesetzt werden. Ferner ist gegebenenfalls ein Vorsprung 7 in Form eines Gewinde- oder Steckeinsatzes für einen Abzugshahn 8 in Bodennähe in der Sichtseite S eingeformt, und gegebenenfalls ein weiterer Vorsprung 7 (beispielsweise eine Abdichtung) zum Einstecken eines Füllrohres oder Füllschlauches, der beispielsweise von einem Regenwasserabzweiger aus einem Fallrohr kommt. Anstelle eines Abzugshahns 8 könnte auch ein nicht gezeigter Schlauchset zum Befüllen und/oder Entnehmen von Regenwasser zum Regenwasserbehälter R gehören.

Fig. 2 zeigt einen Folienzuschnitt Z aus einer Kunststofffolie 9 für den Grundkörper 1 von Fig. 1. Die Kunststofffolie 9 ist beispielsweise transparent (klar oder leicht oder vollständig eingefärbt) und z.B. an ihrer zum Grundkörper 1 weisenden Oberfläche mit einem Dekor D versehen, beispielsweise mit einem Druck (Sieb- oder Digitaldruck), vorzugsweise in Fotoqualität. Teil des Dekors D könnte auch eine teilweise oder vollständige Einfärbung oder Pigmentierung des Folienzuschnittes Z sein. Der Folienzuschnitt Z entspricht hier weitgehend einer Abwicklung wenigstens der Sichtseite S des Grundkörpers 1, d.h., hat eine Höhe entsprechend der gesamten Höhe der Sichtseite S und eine Umfangslänge etwas kürzer als die Umfangslänge der Sichtseite S, oder gleich lang, oder sogar länger. Der Folienzuschnitt Z in Fig. 2 hat gerade obere und untere Ränder 10, 11 und gerade Seitenränder 12, 13, und kann vorgebogen oder flächig sein, wie in Fig. 3 angedeutet. Fig. 3 zeigt die Rechteckform (Quadratform) des Folienzuschnittes Z. Im Folienzuschnitt Z kann, falls am Grundkörper 1 mindestens ein Vorsprung 7 vorgesehen ist, wenigstens einen Durchbruch 14 angeformt sein, der als Montier- und Positionierungshilfe für den Folienzuschnitt Z bei dessen Festlegung an dem Grundkörper 1 nutzbar ist.

In Fig. 3 ist bei dem Längsrand 13 ein Überlappungsbereich 15 angedeutet, d.h., die Breite des Folienzuschnittes Z in Fig. 3 ist etwas größer als die abgewickelte Umfangslänge der Sichtseite S des Grundkörpers 1 von Fig. 1, um mit dem Überlappungsbereich 15 die Befestigung zu vereinfachen, die in Fig. 5 in einem Detailschnitt gezeigt ist. Die Längsränder 12 und 13 des Folienzuschnittes Z sind in Fig. 5 einander überlappend positioniert und aneinander durch nur schematisch angedeutete Befestigungseinrichtungen oder -elemente 16 festgelegt, gegebenenfalls sogar auch am Grundkörper 1.

Die Festlegung kann mit einer Verklebung erfolgen, oder mit Kabelbindern, Spreiznieten, einem Klettverschluss, einem Hakenverschluss, oder dgl.. Es ist auch denkbar, in den Längsrändern 12, 13 Ösen einzustanzen und zum Festlegen eine Kordel durchzufädeln (korsettartige Festlegung). Die Befestigungselemente 16 könnten gleich in den Folienzuschnitt Z eingeformt sein, z.B. Druckknöpfe, Haken, Rastnasen, oder dgl.. Alternativ ist es denkbar, den Folienzuschnitt Z mit Spannmanschetten aus Folienmaterial oder elastischem Material festzulegen. Das in Fig. 2 angedeutete Dekor kann beliebiger Art sein, und z.B. Holz, Metall, Mauerwerk, Natursteine, Metall, unterschiedliche Farben oder Muster oder Abbildungen, wie auch allgemeine eine Strukturierung erzeugen und/oder eine Rattanstruktur oder eine Bepflanzung, Blätter, Blüten oder Wassertropfen, und dgl. imitieren.

Fig. 4 verdeutlicht in einer Perspektivansicht den fertigen Regenwasserbehälter R mit dem daran festgelegten Folienzuschnitt Z, der hier die gesamte Sichtseitenhöhe und den gesamten Sichtseitenumfang bedeckt, wobei die optionale Pflanzschale 6 eingesetzt ist und der Abzugshahn 8 so montiert ist, dass der Vorsprung 7 des Grundkörpers 1, von dem nur mehr der obere Öffnungsrand 5 sichtbar ist, formschlüssig in den Durchbruch 14 eingreift.

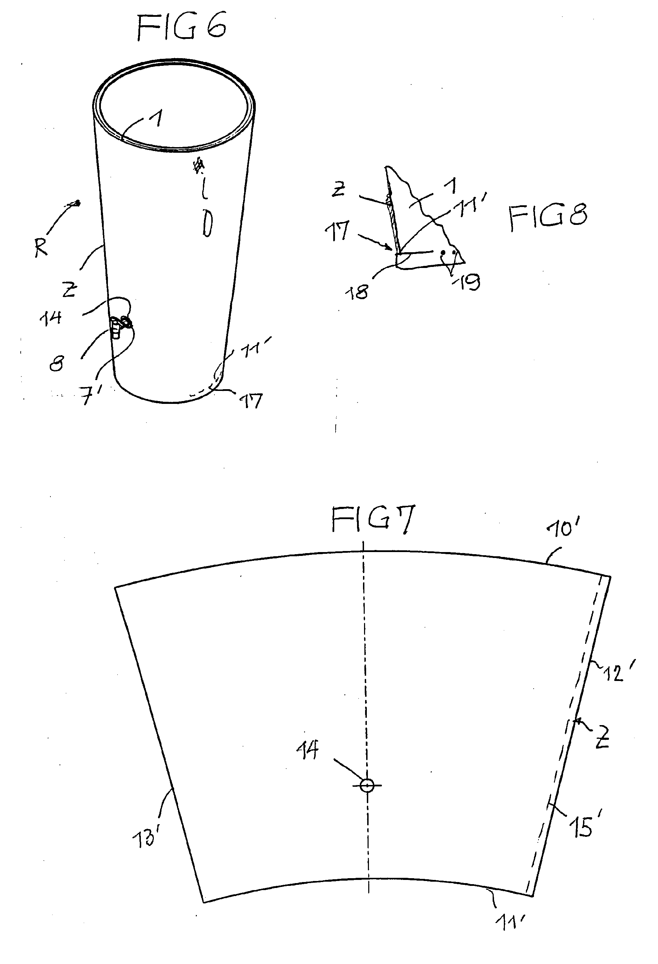

Der Grundkörper 1 der Ausführungsform des Regenwasserbehälters R in Fig. 6 hat eine hier konische Sichtseite entsprechend dem Mantel eines Kegelstumpfes, der mit seinem kleindurchmessrigen Ende auf dem Boden oder einer nicht dargestellten Unterlage aufgestellt wird. Die gesamte Sichtseite ist durch den Folienzuschnitt Z und das Dekor D abgedeckt. Der Abzugshahn 8 ist so montiert, dass der Vorsprung 7' des Grundkörpers 1 in den Durchbruch 14 formschlüssig eingreift.

Als mögliche Option ist in Fig. 6 gestrichelt angedeutet, dass z.B. im Bodenbereich eine umfängliche Anlageschulter 17 zur Positionierung und Abstützung des unteren Randes 11' des in Fig. 7 in einer ebenen Abwicklung der Sichtseite gezeigten Folienzuschnitts Z in den Grundkörper 1 eingeformt ist.

Der Folienzuschnitt in Fig. 7 besitzt einen konkav gerundeten unteren Rand 11' und einen dazu parallelen konvex gerundeten oberen Rand 10' sowie entsprechend der Abwicklung des Kegelstumpfmantels schräggestellte Längsränder 13', 12', wobei hier zur Festlegung beispielsweise ein Überlappungsbereich 15' beim Längsrand 12' vorgesehen ist, um die Festlegung, ähnlich wie in Fig. 5 gezeigt, zu gestalten. Im Folienzuschnitt Z ist wiederum der zumindest eine Durchbruch 14 strategisch so platziert, dass der Festlegungs- oder Verbindungsbereich (siehe Fig. 5) an der dem Abzugshahn 8 gegenüberliegenden Hinterseite des Regenwasserbehälters R und somit außerhalb des Sichtbereiches platziert und der Folienzuschnitt Z auch formschlüssig auf der Sichtseite positioniert wird. Der konische Regenwasserbehälter R gemäß Fig. 6 könnte auch umgekehrt aufgestellt sein, z.B. auf einem Unterbau, den der Folienzuschnitt Z (nicht gezeigt) gegebenenfalls sogar mit abdeckt. Auch könnte es sich um einen Pyramidenstumpf handeln.

Die in Fig. 6 angedeutete Option der Anlageschulter 17 ist in Fig. 8 in einem Detailschnitt gezeigt. Die Anlageschulter 17 ist hier eine in Umfangsrichtung durchgehende erhabene Schulter 18, an der sich der untere Rand 11' des Folienzuschnittes Z abstützen kann, wobei hier eine bündige oder eine vorstehende oder sogar eine versenkte Anordnung des Folienzuschnittes Z in Bezug auf die Anlageschulter 18 gewählt sein kann. Alternativ kann anstatt einer umlaufenden Anlageschulter 18 einfacher nur eine Serie erhabener Vorsprünge 19 in dem Grundkörper 1 geformt sein. Die Anlageschulter 18 bietet nicht nur eine Montier- und Positionierhilfe beim Anbringen des Folienzuschnittes Z, sondern schützt auch den gegebenenfalls empfindlichen unteren Rand 11' des Folienzuschnittes Z. Eine entsprechende Anlageschulter 18 könnte alternativ oder additiv auch beim oberen Endbereich der Sichtseite im Grundkörper 1 geformt sein.

Der Folienzuschnitt Z kann aus einer naturbelassenen, ein- oder durchgefärbten Folie aus PP, PVC, PMMA, einem Polykarbonat oder ähnlichem Kunststoffmaterial hergestellt sein, wobei eine Foliendicke von beispielsweise mindestens 1 mm oder gegebenenfalls mehreren Millimetern gewählt sein kann. Die Einstellung des Folienmaterials kann biegsam oder halbstarr oder gegebenenfalls weitgehend starr sein, so dass der festgelegte Folienzuschnitt keine Falten oder Verwerfungen bildet. Die dem Betrachter zugewandte Oberfläche des Folienzuschnittes kann poliert oder glänzend oder matt oder strukturiert sein, gegebenenfalls mit einem Metallic-Effekt.

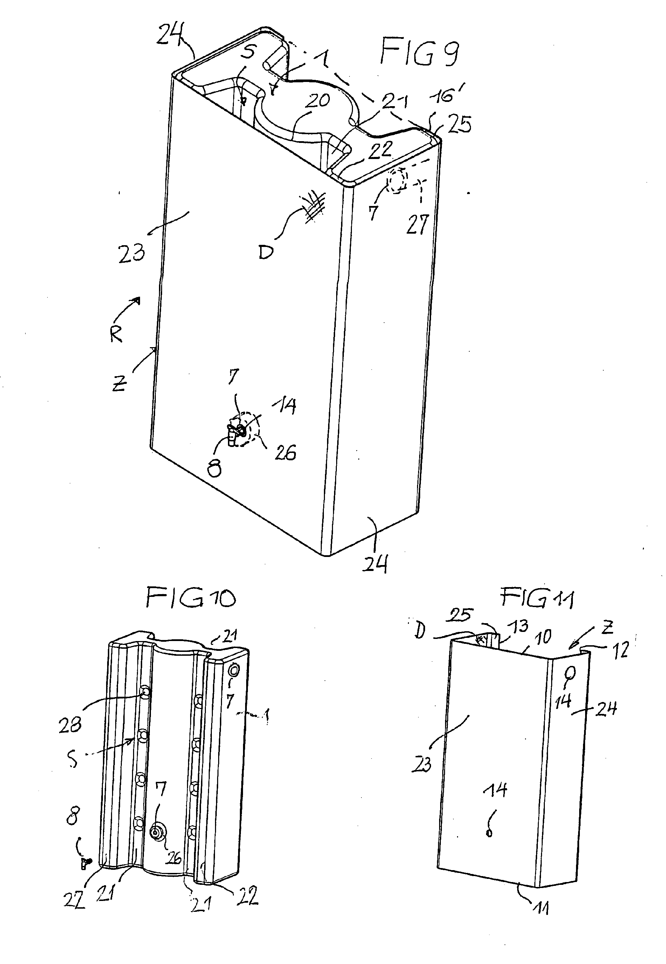

Fig. 9 zeigt in Verbindung mit den Fig. 10 und 11 eine weitere Ausführungsform eines Regenwasserbehälters R, vorzugsweise größeren Aufnahmevolumens, dessen Grundkörper 1 aus Herstellungs- und Festigkeitsgründen keine gleichförmige glatte Sichtseite, sondern eine Sichtseite S mit technisch bedingten Vertiefungen 21 und erhabenen Bereichen 22 besitzt. Der in Fig. 9 festgelegte Folienzuschnitt Z mit seinem Dekor D deckt zumindest Teilbereiche der Sichtseite S des Grundkörpers 1 ab und überbrückt mit jeweils gerade durchgehender Erstreckung zumindest die technisch bedingten Vertiefungen 21. Der Folienzuschnitt Z ist eine allseits glatte Hülle des unregelmäßigen Grundkörpers, und zwar hier mit einem vorderen ebenen Abschnitt 23, von dem abgewinkelte, ebene Abschnitte 24 entlang der Seitenwände des Grundkörpers 1 nach hinten zu umgreifenden, abgewinkelten Abschnitten 25 verlaufen, die sich beispielsweise durch die Elastizität des Kunststoffmaterials des Folienzuschnittes Z selbsttätig verhaken und den Folienzuschnitt Z festlegen oder alternativ oder additiv mit Befestigungselementen 16' fixiert werden, ähnlich wie in Fig. 5, um den Folienzuschnitt Z sicher festzulegen. Der frontale Abschnitt 23 ist beispielsweise mit dem Durchbruch 14 versehen, in den der Vorsprung 7 des Grundkörpers 1 für den Abzugshahn 8 formschlüssig eingreifen kann, wobei der Vorsprung 7 am Grundkörper 1 an einem domartigen Gebilde 26 geformt sein kann, auf welchem der Abschnitt 23 des Folienzuschnittes aufliegen kann. Ferner ist in Fig. 9 ein Befüllschlauch oder -rohr 27 angedeutet, über welchem aus einem nicht gezeigten Fallrohr Regenwasser durch den Vorsprung 7 (eine in einem erhabenen Bereich platzierte Abdichtung) in den Grundkörper 1 einfüllbar sein kann.

Die Perspektivdarstellung des Grundkörpers 1 in Fig. 10 lässt deutlich die wenig ansprechenden technischen Merkmale der Vertiefungen 21 und erhabenen Bereiche 22 in der Sichtseite S erkennen, wie auch den erhabenen Vorsprung 7 an der Struktur 26. Die sich gegenüberliegenden Vertiefungen 21 sind beispielsweise durch durchgehende Rohrabschnitte 28 miteinander verbunden, um insgesamt höhere Drucksteifigkeit des Grundkörpers 1 bei geringer Wandstärke gewährleisten zu können. Diese technischen Merkmale werden jedoch gemäß Fig. 9 durch den Folienzuschnitt Z und dessen Dekor D vor einem Betrachter verborgen.

Der Folienzuschnitt Z gemäß Fig. 11 kann ein ebener, quadratischer oder rechteckiger Folienzuschnitt sein, oder optimal sogar mit der in Fig. 11 gezeigten C-förmigen Kontur vorgeformt sein, so dass sich dieser vorgeformte Folienzuschnitt Z unter Nutzen der Elastizität des Kunststoffmaterials aufweiten und über den Grundkörper 1 knüpfen oder in dessen Längsrichtung über diesen schieben lässt, bis die Vorsprünge 7 in die Durchbrüche 14 eingreifen. Auch in Fig. 9 erstreckt sich der festgelegte Folienzuschnitt Z zweckmäßig über die gesamte Sichtseitenhöhe des Grundkörpers 1.

Die in den Fig. 1, 6 und 9 gezeigten und erläuterten geometrischen Figuren des Grundkörpers 1 stellen nur eine nicht beschränkende Auswahl aus unterschiedlichen Möglichkeiten dar. Das Material des Grundkörpers 1 kann zweckorientiert aber kostengünstig und gut verarbeitbar sein, z.B. kostengünstiges Recycling-Material. Der Kunststoff des Folienzuschnittes kann relativ hochwertig sein, z.B. witterungsbeständig, UV-resistent, reibfest, etc..

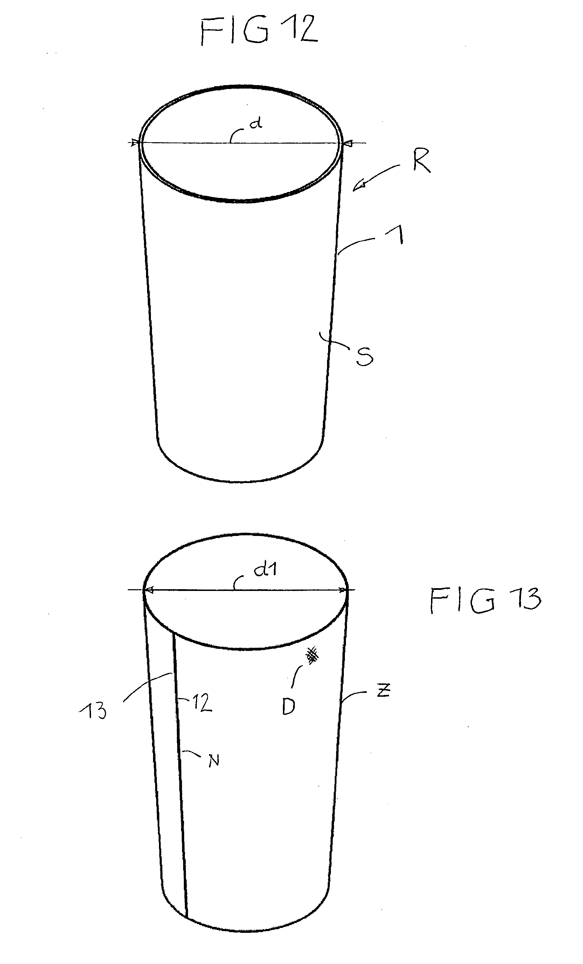

Die Fig. 12 bis 18 verdeutlichen eine weitere Ausführungsform eines Regenwasserbehälters gemäß der Erfindung, bei der der Folienzuschnitt Z aus einem zumindest thermisch schrumpffähigen Kunststoff besteht, und auf zumindest die Sichtseite S des Regenwasserbehälter-Grundkörpers 1 durch Aufschrumpfen festgelegt wird.

In Fig. 12 hat der Regenwasserbehälter-Grundkörper 1 beispielsweise die Form eines schwachen Kegelstumpfes mit einer konischen Sichtseite S und einem Durchmesser d, beispielsweise am großdurchmessrigen Ende. Der Regenwasserbehälter-Grundkörper 1 ist beispielsweise nach einem Spritzgieß-, Blas- oder Rotationsgießverfahren hergestellt, gegebenenfalls unter teilweiser oder vollständiger Verwendung von Recycling-KunststoffMaterial.

Fig. 13 verdeutlicht den zum Dekorieren des Regenwasserbehälter-Grundkörpers 1 von Fig. 12 vorgefertigten Folienzuschnitt Z, der als Kegelstumpf-Mantel ausgebildet ist, das Dekor D aufweist, und mit einer gehefteten Naht N versehen ist, in der die Zuschnittsränder 12, 13 miteinander verbunden sind, z.B. nach einem Schweißprozess. Der Durchmesser d1 am großdurchmessrigen Ende des Folienzuschnittes Z weist ein Übermaß gegenüber dem Durchmesser d in Fig. 12 auf, um den Folienzuschnitt Z vor dem Aufschrumpfen bequem über den Regenwasserbehälter-Grundkörper 1 stülpen zu können. Gegebenenfalls ist auch ein nicht gezeigtes Höhenübermaß beim Folienzuschnitt Z vorgesehen. Das Dekor D kann im Hinblick auf das Schrumpfen so berechnet sein, dass es nach dem Schrumpfen wie gewünscht aussieht.

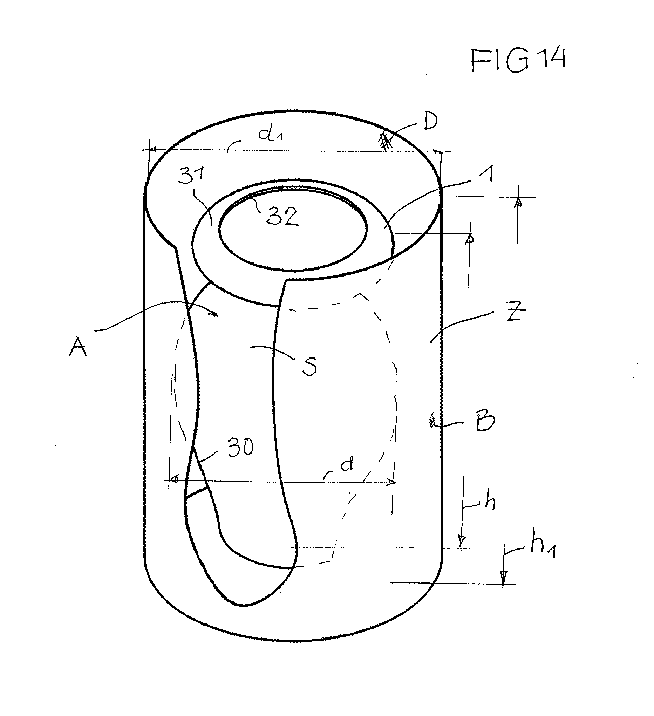

Fig. 14 verdeutlicht eine Anordnung eines beispielsweise nach Art einer Amphore ausgebildeten Regenwasserbehälter-Grundkörpers 1 mit seiner Sichtseite S, einem bauchigen Unterteil 30, einem nach außen gewölbten oberen Kragenbereich 31 und einer oberen Öffnung 32. Der Regenwasserbehälter-Grundkörper 1 ist in den hier beispielsweise als Kreiszylinder-Mantel ausgebildeten Folienzuschnitt Z eingesetzt, der ein Abschnitt einer Schlauchfolie ohne Naht sein kann und ein Übermaß d1-d sowie h1-h jeweils gegenüber dem Regenwasserbehälter-Grundkörper 1 hat und diesen außen zunächst mit Abstand voll umgibt. Der Folienzuschnitt Z ist mit dem z.B. entsprechend der Schrumpfung vorausberechneten Dekor D versehen und weist gegebenenfalls an seiner Außenseite eine kratzfeste Beschichtung B auf, die auf Polyurethan- oder Acryl-Basis hergestellt sein kann.

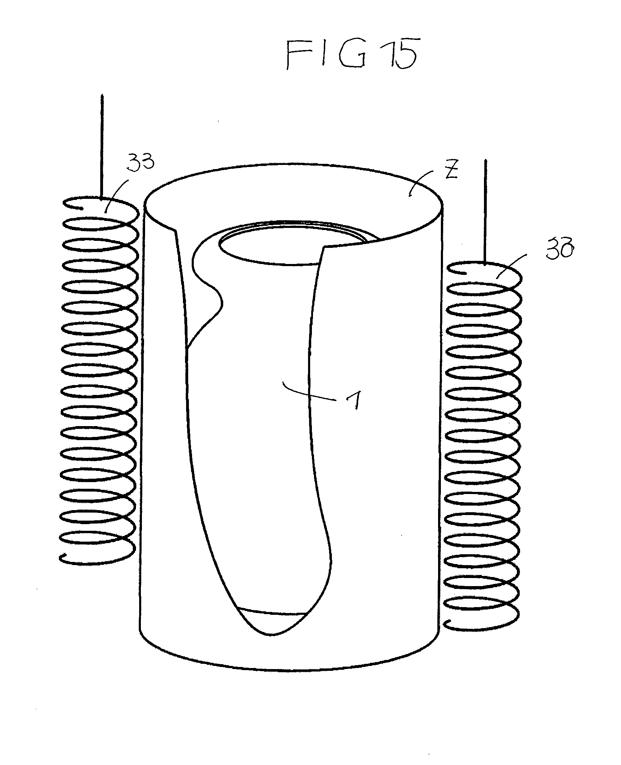

In Fig. 15 ist die Anordnung von Fig. 14 zwischen mehreren Wärmequellen 33 gezeigt, die zum thermischen Aufschrumpfen des Folienzuschnittes Z auf den Regenwasserbehälter-Grundkörper 1 eingesetzt werden. Die Wärmequellen 33 können die gesamte Anordnung umgeben, oder sie drehen sich relativ zur Anordnung, oder es dreht sich die Anordnung relativ zu den Wärmequellen.

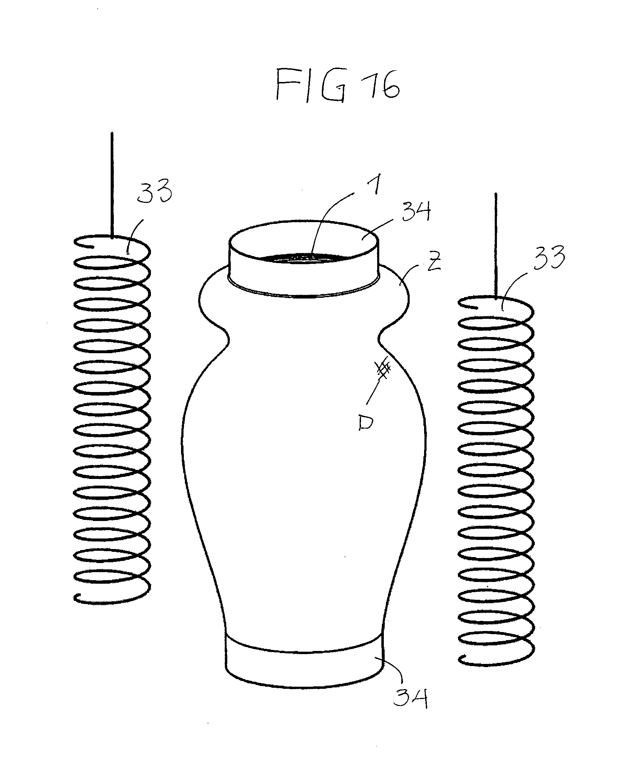

Fig. 16 verdeutlicht die Anordnung von Fig. 14 nach dem Aufschrumpfen des Folienzuschnittes Z mit Hilfe der Wärmequellen 33, wobei Höhenüberstände 34 des Folienzuschnittes Z über die Oberseite und den Boden des Regenwasserbehälter-Grundkörpers 1 überstehen.

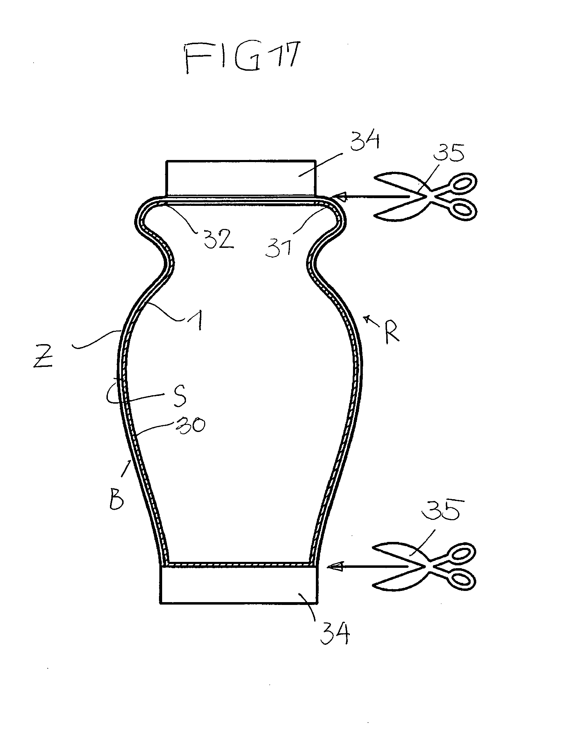

Gemäß Fig. 17 werden die Höhenüberstände 34 mit entsprechenden Hilfsmitteln, z.B. Scheren, Klingen oder dgl., entfernt, z.B. abgeschnitten, so dass der Folienzuschnitt Z in aufgeschrumpftem Zustand zumindest die Sichtseite S des Regenwasserbehälter-Grundkörpers 1 über die gesamte Höhe umfasst und auch mit dem Rand der Öffnung 32 abschließt, wie auch mit dem Bodenrand. Der Folienzuschnitt Z könnte in den Hals unterhalb des Kragenbereiches 31 eingeschmiegt sein und den Kragenbereich 31 freilassen.

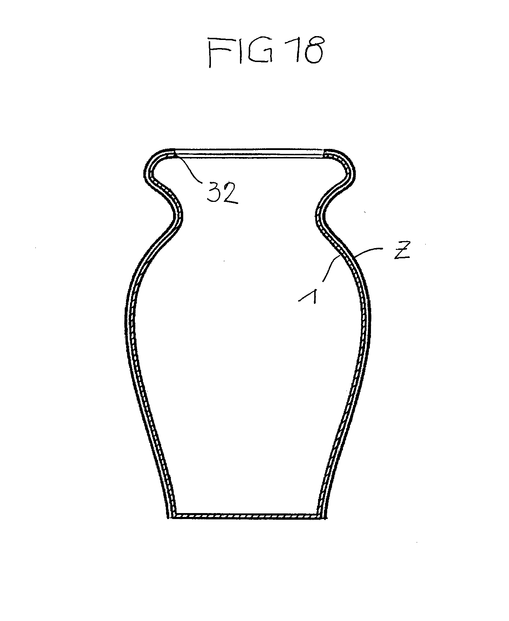

Der fertige Regenwasserbehälter R in Fig. 18 ist bis auf den Boden des Regenwasserbehälter-Grundkörpers 1 und den Innenrand der Öffnung 32 z.B. vollflächig von dem Folienzuschnitt Z bedeckt, der sich an die jeweiligen Kanten eng und mit Vorspannung anschmiegt und herstellungs-, material- oder einfärbungsbedingte Merkmale des Regenwasserbehälter-Grundkörpers 1 zumindest an der Sichtseite S bestens kaschiert.

Der aufgeschrumpfte Folienzuschnitt Z kann naturfarben, teilweise oder komplett eingefärbt sein. Die Außenseite kann glänzend, matt oder bemustert oder strukturiert sein. Es kann ein Metallic-Effekt hervorgerufen werden. Die kratzfeste Beschichtung B schützt die Oberfläche gegen Witterungs- oder sonstige Einflüsse. Das Design ist z.B. durch Drucken erzeugt. Hierfür kann ein Sieb- oder Digitaldruck, zweckmäßig mit Fotoqualität, benutzt werden. Die Herstellung des dekorierten Regenwasserbehälters R ist einfach und kostengünstig, u.a. weil der gleiche undekorierte Grundkörper 1 auch für andere Einsatzfälle brauchbar ist (höhere Stückzahl).

## Patentansprüche

1. Regenwasserbehälter (R) zur oberirdischen Aufstellung, insbesondere im häuslichen Bereich, mit einem aus Kunststoff hergestellten Grundkörper (1) zur Bevorratung von Regenwasser, der zumindest an einem Teilbereich seiner frontalen Sichtseite (S) ein den Grundkörper (1) optisch zumindest teilweise kaschierendes Dekor (D) darbietet, **dadurch gekennzeichnet, dass** das Dekor (D) z.B. als Druck auf einen Kunststoff-Folienzuschnitt (Z) aufgebracht ist, der den Grundkörper (1) an der Sichtseite (S) zumindest zum Teil umfasst und nachträglich daran festgelegt ist.

2. Regenwasserbehälter nach Anspruch 1, **dadurch gekennzeichnet, dass** an demselben Regenwasserbehälter-Typ wahlweise Folienzuschnitte (Z) mit unterschiedlichen Dekors (D) festlegbar sind.

3. Regenwasserbehälter nach Anspruch 1, **dadurch gekennzeichnet, dass** der Folienzuschnitt (Z) mit zwischen Folienzuschnittsrändern (12, 13, 12', 13') wirkenden Befestigungselementen (16) wie Kabelbindern, Spreiznieten, Klettverschlüssen, Hakenverschlüssen, Klebeverbindungen oder dgl. am Grundkörper (1) festgelegt ist.

4. Regenwasserbehälter nach Anspruch 1, **dadurch gekennzeichnet, dass** der Folienzuschnitt (Z) den Grundkörper (1) teilumfänglich und jeweils relativ glatt umfasst, vorzugsweise an mindestens zwei oder drei zueinander abgewinkelten und aneinander anschließenden Sichtseiten-Teilbereichen.

5. Regenwasserbehälter nach Anspruch 1, **dadurch gekennzeichnet, dass** in dem Folienzuschnitt (Z) wenigstens ein vorgeformter Durchbruch (14) als Positionier- und/oder Zentrierhilfe für einen an der Sichtseite (S) vorgesehenen Vorsprung (7) des Grundkörpers (1) vorgesehen ist, wobei, vorzugsweise, der Vorsprung (7) ein am Grundkörper (1) montierter Hahn (8) oder Schlauch oder eine erhabene Hahn- oder Schlauch- oder Dichtungs-Einfassung in der Sichtseite (S) ist, der in festgelegter Position des Folienzuschnittes (Z) formschlüssig in den Durchbruch (14) eingreift.

6. Regenwasserbehälter nach Anspruch 1, **dadurch gekennzeichnet, dass** der Folienzuschnitt (Z) aus einer transparenten, vorzugsweise klaren oder leicht eingefärbten und/oder opaken, Kunststofffolie (9) besteht, und, vorzugsweise, an seiner in Einbaulage zum Grundkörper (1) weisenden oder der äußeren Oberfläche den Druck, vorzugsweise als Sieb- oder Digitaldruck in Fotoqualität, aufweist.

7. Regenwasserbehälter nach wenigstens einem der Ansprüche 1 bis 6, **dadurch gekennzeichnet, dass** der Folienzuschnitt (Z) aus zumindest thermisch schrumpffähigem Kunststoff besteht und nachträglich auf den Grundkörper (1) thermisch aufgeschrumpft ist und dass, vorzugsweise, der Folienzuschnitt (Z) aus PVC, Polykarbonat, PMMA, PP, PE oder einer ähnlichen Kunststoffsorte besteht.

8. Regenwasserbehälter nach Anspruch 7, **dadurch gekennzeichnet, dass** der Folienzuschnitt (Z) nach Art einer Stretch-Sleeve-Folie als nahtlose Schlauchfolie oder mit gehefteten, vorzugsweise verschweißten, Zuschnittsrändern (12, 13) ausgebildet ist, vorzugsweise in etwa als Kreiszylinder-Mantel und/oder mit einem Übermaß (d1-d; h1-h) gegenüber dem Grundkörper (1).

9. Regenwasserbehälter nach Anspruch 1, **dadurch gekennzeichnet, dass** der Folienzuschnitt (Z) eben und biegsam oder vorgebogen und weiterhin biegsam ist.

10. Regenwasserbehälter nach Anspruch 1, **dadurch gekennzeichnet, dass** der Folienzuschnitt (Z) mindestens halbhart und korrespondierend mit dem Umriss des Grundkörpers (1) und/oder dessen Hüllfläche mit Abwinklungen (24, 25) vorgebogen ist.

11. Regenwasserbehälter nach Anspruch 1, **dadurch gekennzeichnet, dass** sich der Folienzuschnitt (Z) in Einbaulage über die Gesamthöhe zumindest der Sichtseite (S) des Grundkörpers erstreckt.

12. Regenwasserbehälter nach Anspruch 1, **dadurch gekennzeichnet, dass** sich am Grundkörper eine obere und/oder eine untere, erhabene Anlageschulter (17, 18) oder einzelne erhabene Vorsprünge (19) zur Höhenpositionierung des Folienzuschnittes (Z) entlang der Sichtseite (S) umlaufend oder verteilt erstreckt bzw. erstrecken, und dass der festgelegte Folienzuschnitt (Z) jeweils mit einem Zuschnittsrand (10, 11, 10', 11') daran bündig, versenkt oder überstehend abstützbar ist.

13. Regenwasserbehälter nach wenigstens einem der vorhergehenden Ansprüche, **dadurch gekennzeichnet, dass** der Grundkörper (1) entweder eine kreiszylindrische Sichtseite (S) hat, und dass der Folienzuschnitt eben oder vorgebogen rechteckig oder quadratisch entsprechend einer Abwicklung wenigstens der Sichtseite ist, oder die Sichtseite (S) dem Mantel eines Kegelstumpfes oder Pyramidenstumpfes entspricht, und der Folienzuschnitt annähernd trapezförmig mit unteren und oberen konkav und konvex gerundeten Seitenrändern (10', 11') und der Erzeugenden der Sichtfläche entsprechend schrägen Längsrändern (12', 13') annähernd als Abwicklung der Sichtseite vorgeformt ist, vorzugsweise mit einem Überstand (15') im Bereich eines Längsrandes (12') zum Herstellen einer Überlappung.

14. Regenwasserbehälter nach wenigstens einem der Ansprüche 1 bis 13, **dadurch gekennzeichnet, dass** der Grundkörper (1) an der Sichtseite (S) abwechselnd Vertiefungen (21) und Vorsprünge (20, 22) aufweist und im Grundzug blockförmig ist, und dass der Folienzuschnitt (Z) entweder eben und rechteckig oder quadratisch oder C-förmig mit Abwinkelungen (24, 25) vorgebogen ist, derart, dass der Folienzuschnitt (Z) in Einbaulage zumindest einen überwiegenden Teil der Sichtseite (S) des Grundkörpers unter ebener Überbrückung zumindest der Vertiefungen (21) in der Sichtseite (S) umfasst.

15. Regenwasserbehälter nach wenigstens einem der vorhergehenden Ansprüche, **dadurch gekennzeichnet, dass** der Folienzuschnitt (Z) natur oder teilweise oder komplett eingefärbt und/oder glänzend und/oder matt und/oder strukturiert und/oder opak, gegebenenfalls mit einem Metallic-Effekt, ist.

16. Regenwasserbehälter nach wenigstens einem der vorhergehenden Ansprüche, **dadurch gekennzeichnet, dass** der Folienzuschnitt (Z) an zumindest der Außenseite eine kratzfeste Beschichtung (B) trägt, vorzugsweise auf einer Polyurethan- oder Acryl-Basis.

17. Regenwasserbehälter nach wenigstens einem der vorhergehenden Ansprüche, **dadurch gekennzeichnet, dass** der Grundkörper (1) nach einem Spritzgieß-, Blas- oder Rotationsgießverfahren hergestellt ist, vorzugsweise unter ausschließlicher oder teilweiser Verwendung von Kunststoff-Recycling-Material.
